# EUROPEAN PATENT SPECIFICATION

(11) **EP 0 319 238 B1**
(45) Date of publication and mention of the grant of the patent: **03.02.1993**
(21) Application number: 88311282.3
(22) Date of filing: 29.11.1988
(51) Int. Cl.: B29C 45/17

(54) **Injection molding machine**
Spritzgiessmaschine
Machine à mouler par injection

(30) Priority: 03.12.1987 JP 183780/87 U
(43) Date of publication of application: 07.06.1989
(73) Proprietor: SUMITOMO HEAVY INDUSTRIES, LTD, Tokyo 100 (JP)
(72) Inventor: Nishimaki, Takashi, Chiba-shi (JP)
(74) Representative: Daley, Michael John

(56) References cited:
- FR-A- 2 291 848
- US-A- 3 577 597
- US-A- 3 596 326
- PATENT ABSTRACTS OF JAPAN, vol. 9, no. 59 (M-361)[1774], 6th March 1985; & JP-A-59 187 824 (YAMASHIRO) 25-10-1984

## Description

### BACKGROUND OF THE INVENTION

### Field of the Invention

This invention relates to an improvement in a vertical injection molding machine.

### Description of the Prior Art

In a usual vertical injection molding machine, the plasticizing device is situated at a high position, so that it is difficult to change the plasticizing cylinder unit or to change the screw only. In order to draw out and remove only the screw of a vertical injection molding machine, there is no alternative but to remove the nozzle side section (lower section) of the machine. When this is to be done during molding, i.e., when the mold is attached to the platen, the mold has to be removed.

Further, since the round-insertion type system is generally adopted for the plasticizing cylinder, including the screw, the operation of removing only the screw involves a stroke augmentation similar to the moving cylinders for the downward drawing.

The operation of removing the screw is conventionally carried out on the ground after removing the plasticizing cylinder. However, it is very incovenient and dangerous to remove the heavy plasticizing cylinder and to attach it back to the injection molding machine each time the screw is to be removed.

### SUMMARY OF THE INVENTION

It is accordingly the object of this invention to provide an injection molding machine in which the operation of changing the screw thereof can be performed on the injection molding machine, sefely and easily.

In accordance with this invention, there is provided an injection molding machine having a slidable base which can be vertically moved by means of moving cylinders, a plasticizing cylinder unit into which a screw is movably fitted and which is vertically supported by said slidable base, and an injection device for causing said screw to advance and retreat, characterized in that said machine further comprises a rotating mechanism for rotating said plasticizing cylinder unit with respect to said slidable base around a horizontal axis, said injection device including an attaching/detaching mechanism for detachably connecting it to said screw, a such-back mechanism for retreating it so as to separate it from the screw, and a retaining mechanism for keeping it from descending.

When performing the operation of removing and replacing the screw of an injection molding machine with the above construction, the plasticizing cylinder is first raised by means of moving cylinders, and the engagement between the injection device and the screw is released by means of an injection device attaching/detaching mechanism. The nozzle section of the plasticizing cylinder is then inclined to the operation side (forwardly) by means of a rotating mechanism in the rear section of the plasticizing cylinder, the screw being drawn out rearwards (or obliquely upwards). When detaching the plasticizing cylinder unit from the machine, the unit is suspended by means of a crane or the like, and the rotating mechanism in the rear section of the plasticizing unit is removed, thereby separating said unit from the injection molding machine. The plasticizing cylinder unit can then be raised, to be cleaned later in the maintenance workshop.

The operation of attaching the plasticizing cylinder unit to the injection molding machine can be conducted in an order reverse to that of the above detaching operation. Thus, the plasticizing cylinder unit can be changed easily and quickly.

### BRIEF DESCRIPTION OF THE DRAWINGS

Fig. 1 shows, partly in section, a vertical injection molding machine in accordance with an embodiment of this invention;
Fig. 2 is a plan view of a water-cooled cylinder provided in the injection molding machine;
Fig. 3 is a schematic view showing the rotating condition of the plasticizing cylinder unit of the injection molding machine; and
Fig. 4 shows, partly in section, the hydraulic cylinder for transmitting the torque of this unit.

### DESCRIPTION OF THE PREFERRED EMBODIMENTS

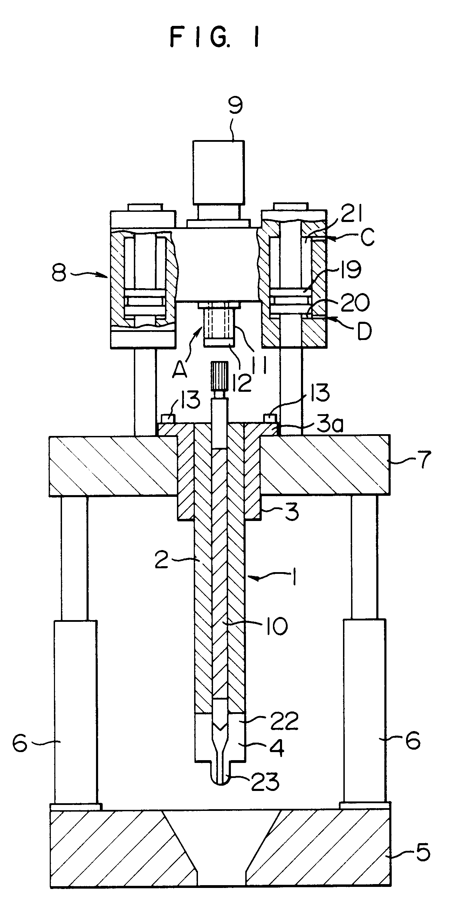

Embodiments of this invention will now be described with reference to the attached drawings. The injection molding machine shown in Fig. 1 includes a plasticizing cylinder unit 1 which is composed of a plasticizing cylinder 2 and a water-cooled cylinder 3. The plasticizing cylinder unit 1 is held by a slidable base 7 which is supported by a pair of moving cylinders 6, 6 arranged above a movable platen 5 for inserting a nozzle 4 into the mold. The entire plasticizing cylinder unit 1 can move vertically by means of said pair of moving cylinders 6, 6.

An oil motor 9 which is attached to an injection device 8 is connected through the drive shaft of this injection device to a screw 10 of the plasticizing cylinder unit 1 by means of an attaching/detaching mechanism A. After resin metering, which is conducted through the rotation of the screw 10 while the screw is retracted, and such-back, the nozzle 4 is inserted into the mold so as to inject the resin into it. The attaching/detaching mechanism A for detachably connecting the injection device 8 with the screw 10 is composed of a coupling 11 and a split flange 12 which are provided on the side of the drive shaft of the injection device 8. Accordingly, the screw 10 can be separated from the drive shaft of the injection device 8 by removing the split flange 12 of the coupling 11, thereby allowing the plasticizing cylinder unit 1, including the water-cooled cylinder 3, to be changed.

The water-cooled cylinder 3 has a flange 3a and can be fitted into the slidable base 7 from the flank, the slidable base 7 having a recess provided for this purpose. The water-cooled cylinder 3 can then be fastened to the slidable base 7 by means of mounting bolts 13, thus making it possible to avoid unnecessary vertical movement.

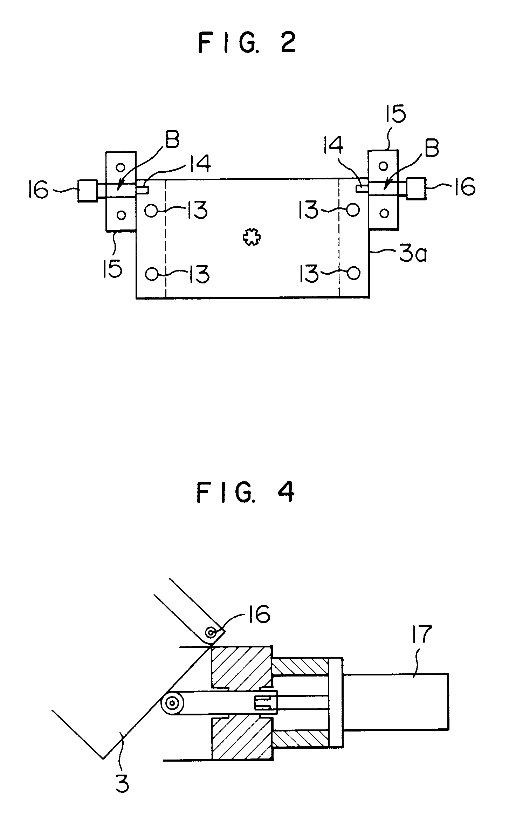

Provided in the rear section of the flange 3a of the water-cooled cylinder 3 is a rotating mechanism B for enabling the plasticizing cylinder unit 1 to rotate (see Figs. 2 through 4). This rotating mechanism B is composed of rotational fulcrum bolt-pins 16, 16 which are inserted into pin-holes 14, 14 formed in the rear section of the flange 3a of said water-cooled cylinder 3 and which are positioned by means of clamping plates 15, 15, and a hydraulic cylinder 17 for upwardly rotating the plasticizing cylinder unit 1. The rotation of the plasticizing cylinder unit 1 may be effected manually instead of by using said hydraulic cylinder 17. The plasticizing cylinder 2 and the water-cooled cylinder 3 are equipped with wire-eyes 18 for enabling the entire plasticizing cylinder unit 1 to be changed by means of a crane or the like.

Said injection device 8 is equipped with a suck-back mechanism C for separating it from the plasticizing cylinder unit 1 and a retaining mechanism D for keeping it from descending. An oil chamber 21, which is provided on the side opposite to an oil chamber 20 on the injection side with respect to a piston 19 provided in the double-rod type injection device 8, serves as the above suck-back mechanism C. Connected to this suck-back oil chamber 21 is a hydraulic circuit for auxiliary metering which is composed of various components (not shown) such as an oil pump, a switching valve for auxiliary metering, a pressure-regulating valve by which the hydraulic force is set so as to cancel the retreating resistance of the screw 10, and a relief valve. Connected, on the other hand, to the injection oil chamber 20 is a hydraulic circuit (not shown) for controlling the injection device. The hydraulic circuit performs the operation of automatic purging in the processes of injecting, pressure-retaining, and metering, the operation of auxiliary metering in the process of preparing for the injection, and the operations of auxiliary metering and suck-back during injection molding.

A cylinder head 22, a nozzle section 23, and a wire 24 are also shown in the drawings.

In removing or changing the screw 10 in the injection molding machine having the construction described above, the entire plasticizing cylinder unit 1 is first raised by means of the moving cylinders 6, 6. The split flange 12 of the coupling 11 for suck-back is then removed, thereby separating the drive shaft of the injection device 8 from the screw 10. The injection device 8 is then raised so as to be separated from the screw 10 and is kept from descending. This is effected by means of the hydraulic circuit for controlling the injection device and the hydraulic circuit for auxiliary metering, connected, respectively, to the injection side oil chamber 20 and the suck-back oil chamber 21 on the opposite side, provided in the injection device 8.

Next, the injection device 8 is raised by manually operating push-button switches in order to bring it out of the rotational engagement with the coupling 11, the mounting bolts 13 fastening the water-cooled cylinder 3 to the slidable base 7 being removed.

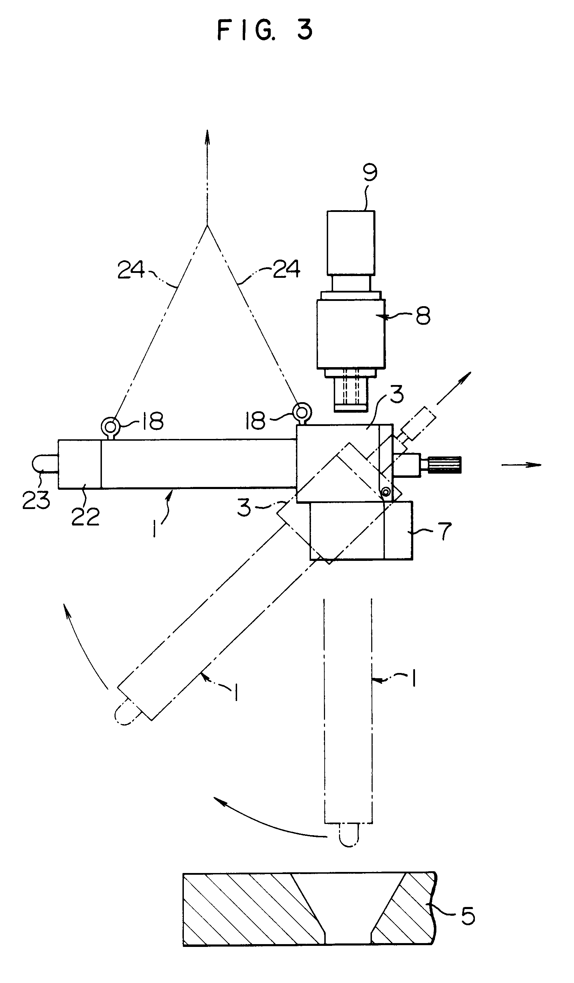

After that, the nozzle section 23 of the cylinder head 22 is inclined on the operation side (forwardly), with the rotational fulcrum bolt-pins 16 provided in the rear section of the flange 3a of the water-cooled cylinder 3 in the plasticizing cylinder unit 1 serving as the fulcrum (see Fig. 3). As shown in Fig. 4, this inclination is effected by means of the hydraulic cylinder 17, which serves to push forward the water-cooled cylinder 3 of the plasticizing cylinder unit 1.

The plasticizing cylinder 2 is then heated up so as to melt the resin in the screw 10, whereby the screw 10 is drawn out rearwards (or obliquely upwards).

When removing the plasticizing cylinder unit 1, the wire 24 is passed through the wire-eyes 18 so as to suspend the unit 1 (see Fig. 3) by means of a crane or the like (not shown). The plasticizing cylinder unit 1 is separated from the injection molding machine by releasing the rotational fulcrum bolt-pins 16 in the rear section of the flange 3a of the water-cooled cylinder 3 until they come off through the pin-holes 14 formed in the flange 3a. The plasticizing cylinder unit 1 is then raised and carried to the maintenance workshop, where it is cleaned.

The operation of attaching the plasticizing cylinder unit 1 to the injection molding machine can be conducted in an order reverse to that of the detaching operation described above. The plasticizing cylinder unit 1 can thus be changed easily and quickly.

While the above embodiment of the invention described here applies to a vertical injection molding machine, it goes without saying that it is also applicable to a horizontal one.

As described above in detail, the injection molding machine in accordance with this invention allows, with a simple structure, the operation of removing or changing the screw thereof, which has been a problem with injection molding machines, to be performed on the injection molding machine, safely, easily and quickly.

## Claims

1. An injection molding machine having a slidable base (7) which can be vertically moved by means of moving cylinders (6), a plasticizing cylinder unit (1) into which a screw (10) is movably fitted and which is vertically supported by said slidable base (7), and an injection device (8) for causing said screw (10) to advance and retreat, characterized in that said machine further comprises a rotating mechanism (B) for rotating said plasticizing cylinder unit (1) with respect to said slidable base (7) around a horizontal axis (16), said injection device (8) including an attaching/detaching mechanism A for detachably connecting it to said screw (10), a suck-back mechanism (C) for retreating it so as to separate it from said screw, and a retaining mechanism (D) for keeping it from descending.

## Patentansprüche

1. Spritzgußmaschine mit einer verschiebbaren Basis (7), die mittels Bewegungszylindern (6) vertikal bewegt werden kann, mit einer Plastifizier-Zylindereinheit (1), in die eine Schnecke (10) bewegbar eingepaßt ist und die durch die verschiebbare Basis (7) vertikal getragen wird, und mit einer Spritzeinrichtung (8) zum Nachvornebewegen und Zurückziehen der Schnecke (10), dadurch gekennzeichnet, daß die Maschine weiterhin einen Drehmechanismus (B) zum Drehen der Plastifizier-Zylindereinheit (1) bezüglich der verschiebbaren Basis (7) um eine horizontale Achse (16) umfaßt, daß die Spritzeinrichtung (8) einen Verbindungs-/Lösemechanismus (A), um sie lösbar mit der Schnecke (10) zu verbinden, einen Rücksaugmechanismus (C), um sie zum Trennen von der Schnecke zurückzuziehen, und einen Rückhaltemechanismus (D), um sie von einem Herabsinken abzuhalten, umfaßt.

## Revendications

1. Machine de moulage par injection ayant une base coulissante (7) qui peut être déplacée verticalement par des vérins (6) de déplacement, un ensemble (1) à cylindre de plastification dans lequel une vis (10) est montée afin qu'elle soit mobile et qui est supporté verticalement par la base coulissante (7), et un dispositif d'injection (8) destiné à provoquer l'avance et le recul de la vis (10), caractérisée en ce que la machine comporte en outre un mécanisme (B) d'entraînement en rotation autour d'un axe horizontal (16) de l'ensemble (1) à cylindre de plastification par rapport à la base coulissante (7), le dispositif d'injection (8) comportant un mécanisme A de fixation-séparation destiné à le raccorder de manière amovible à la vis (10), un mécanisme (C) de retour par aspiration destiné à le faire reculer afin qu'il se sépare de la vis, et un mécanisme (D) de retenue destiné à l'empêcher de descendre.
